# EUROPÄISCHE PATENTSCHRIFT

(11) **EP 3 212 487 B1**
(45) Veröffentlichungstag und Bekanntmachung des Hinweises auf die Patenterteilung: **25.12.2019**
(21) Anmeldenummer: 15780787.6
(22) Anmeldetag: 29.09.2015
(51) Int. Cl.: B62D 15/02, G08G 1/14, B60R 25/00

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(30) Priorität: 27.10.2014 DE 102014221749
(43) Veröffentlichungstag der Anmeldung: 06.09.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/072350
(87) Internationale Veröffentlichungsnummer: WO 2016/066358

(56) Entgegenhaltungen:
- EP-A1- 2 295 281
- EP-A2- 2 316 709
- WO-A1-2014/146196
- DE-A1-102008 051 982
- US-A1- 2010 156 672
- US-A1- 2012 188 100
- US-A1- 2013 231 824
- US-A1- 2014 274 013

## Beschreibung

Die Erfindung betrifft ein Verfahren und eine Vorrichtung zum Betreiben eines Fahrzeugs. Die Erfindung betrifft ferner einen Parkplatzverwaltungsserver für einen Parkplatz. Die Erfindung betrifft des Weiteren ein Computerprogramm.

### Stand der Technik

Die Offenlegungsschrift EP 2 295 281 A1 zeigt ein Kraftfahrzeug, welches mit mehreren Kameras ausgestattet ist. Die Kameras senden ihre Bilder an eine Fernbedienung, mittels welcher ein autonomer Parkvorgang des Kraftfahrzeugs gestartet werden kann.

Die Offenlegungsschrift US 2010/156672 A1 zeigt ein System und ein Verfahren zum automatischen Parken eines Kraftfahrzeugs.

Die Offenlegungsschrift EP 2 316 709 A2 ist als nächstliegender Stand der Technik nach dem Oberbegriff der Ansprüche 1 und 10 zu sehen und zeigt ein Kraftfahrzeug, eine externe Steuerungsvorrichtung sowie ein Verfahren zum Durchführen eines Ausparkvorgangs eines Kraftfahrzeugs.

Bei einem vollautomatisierten (autonomen) sogenannten Valet Parking wird ein Fahrzeug von seinem Fahrer auf einer Abgabestelle, z.B. vor einem Parkhaus, geparkt und von da fährt das Fahrzeug selber in eine Parkposition/Parkbucht und wieder zurück zur Abgabestelle. Zwischenzeitlich, also während des Parkens, steht das Fahrzeug ausgeschaltet in der Parkposition/Parkbucht.

Eine Notwendigkeit für diesen Vorgang kann beispielsweise sein, dass ein Parkplatzverwaltungssystem das Fahrzeug durch ein von außerhalb des Fahrzeugs initiiertes Signal ohne menschliche Unterstützung starten muss. Weiterhin kann ein solcher Start mittels eines Parkplatzverwaltungssystems auch bei einer Übergabe an der Abgabestelle, falls das Fahrzeug bereits abgeschaltet ist, notwendig sein. Beispielsweise kann ein solcher Start auch bei einem Umparken während des Parkvorgangs sinnvoll und notwendig sein. Ein solches Umparken kann beispielsweise umfassen, dass ein Elektrofahrzeug von einer Parkbucht mit einer Lademöglichkeit zu einer Parkbucht ohne eine solche Lademöglichkeit umparken soll.

Es besteht daher ein Bedarf, einen Zugriff auf das Fahrzeug mittels eines solchen Startsignals bezüglich einer Rechtmäßigkeit und Sicherheit (Schutz gegen Diebstahl) sicherzustellen.

### Offenbarung der Erfindung

Die der Erfindung zugrunde liegende Aufgabe kann daher darin gesehen werden, ein Verfahren zum Betreiben eines Fahrzeugs bereitzustellen, das einen Zugriff auf das Fahrzeug bezüglich einer Rechtmäßigkeit und Sicherheit (Diebstahlschutz) sicherstellen kann.

Die der Erfindung zugrunde liegende Aufgabe kann auch darin gesehen werden, eine entsprechende Vorrichtung zum Betreiben eines Fahrzeugs bereitzustellen.

Die der Erfindung zugrunde liegende Aufgabe kann des Weiteren darin gesehen werden, einen Parkplatzverwaltungsserver für einen Parkplatz bereitzustellen.

Die der Erfindung zugrunde liegende Aufgabe kann auch darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, wobei das Fahrzeug über ein Kommunikationsnetzwerk ein Startsignal zum Starten des Fahrzeugs empfängt, wobei das Fahrzeug ansprechend auf das Startsignal nur dann autonom startet, wenn eine oder mehrere vorbestimmte Bedingungen erfüllt sind.

Nach noch einem Aspekt wird eine Vorrichtung zum Betreiben eines Fahrzeugs bereitgestellt, umfassend eine Kommunikationsschnittstelle, die ausgebildet ist, über ein Kommunikationsnetzwerk ein Startsignal zum Starten des Fahrzeugs zu empfangen, und eine Starteinrichtung, die ausgebildet ist, das Fahrzeug ansprechend auf das Startsignal autonom zu starten, wenn eine oder mehrere vorbestimmte Bedingungen erfüllt sind.

Nach einem weiteren Aspekt wird ein Parkplatzverwaltungsserver für einen Parkplatz bereitgestellt, umfassend einen Prozessor, der ausgebildet ist, ein Startsignal zum Starten eines Fahrzeugs zu generieren, und eine Kommunikationsschnittstelle, die ausgebildet ist, das Startsignal über ein Kommunikationsnetzwerk an ein Fahrzeug zu senden.

Gemäß einem weiteren Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Nach einem Aspekt wird ein Fahrzeug bereitgestellt, welches eingerichtet ist, das Verfahren zum Betreiben eines Fahrzeugs auszuführen.

Nach einer Ausführungsform umfasst das Fahrzeug die Vorrichtung zum Betreiben eines Fahrzeugs.

Die Erfindung umfasst also insbesondere den Gedanken, einen Zugriff auf das Fahrzeug mittels eines fahrzeugexternen Startsignals, um das Fahrzeug zu starten, nur dann zuzulassen, wenn eine oder mehrere vorbestimmte Bedingungen erfüllt sind. Dadurch wird insbesondere der technische Vorteil bewirkt, dass ein Zugriff auf das Fahrzeug eingeschränkt werden kann. Das heißt also insbesondere, dass ein Startsignal als solches nicht mehr ausreicht, um das Fahrzeug zu starten. Denn darüber hinaus müssen eine oder mehrere vorbestimmte Bedingungen erfüllt sein. Somit kann also in vorteilhafter Weise eine Sicherheit (z.B. ein Diebstahlschutz) erhöht werden. Insbesondere kann ein Zugriff bezüglich der Rechtmäßigkeit sichergestellt werden.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, navigiert oder fährt. Das Fahrzeug fährt also selbstständig auf dem Parkplatz, ohne dass ein Fahrer hierfür das Fahrzeug steuern müsste. Der Fahrer muss sich selbst nicht mehr im Fahrzeug befinden. Ein solch autonom fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abgabeposition navigiert.

Nach einer Ausführungsform ist vorgesehen, dass die eine oder mehrere Bedingungen umfassen, dass eine momentane Fahrzeugposition innerhalb eines vorbestimmten räumlichen Bereichs liegen muss, damit das Fahrzeug ansprechend auf das Startsignal autonom startet. Dadurch wird insbesondere der technische Vorteil bewirkt, dass sich das Fahrzeug innerhalb des vorbestimmten räumlichen Bereichs befinden muss, um das Fahrzeug mittels des fahrzeugexternen Startsignals zu starten. Wenn sich das Fahrzeug außerhalb des vorbestimmten räumlichen Bereichs befindet, kann das Fahrzeug nicht mehr gestartet werden.

Nach einer Ausführungsform ist vorgesehen, dass der vorbestimmte räumliche Bereich einem Parkvorgang zugeordnet ist. Dass der vorbestimmte räumliche Bereich einem Parkvorgang zugeordnet ist, heißt insbesondere, dass innerhalb des vorbestimmten räumlichen Bereichs das Fahrzeug autonom parken kann. Ein Parkvorgang benötigt in der Regel einen gewissen Bereich, um die einzelnen Parkmanöver, z.B. Hinfahren zur Parkposition, Einparken, Ausparken und Zurückfahren zu der Abgabeposition, durchzuführen. Dieser hierfür notwendige Bereich ist von dem vorbestimmten räumlichen Bereich umfasst. Es wird also gemäß dieser Ausführungsform sichergestellt, dass sich das Fahrzeug mittels des Startsignals nur dann starten lässt, wenn sich das Fahrzeug innerhalb des Bereichs befindet, in welchem es einen Parkvorgang durchführen kann.

Nach einer Ausführungsform ist vorgesehen, dass der vorbestimmte räumliche Bereich einen Parkplatz umfasst oder ein solcher ist. Dadurch wird insbesondere der technische Vorteil bewirkt, dass sich das Fahrzeug nur innerhalb des Parkplatzes mittels des Startsignals starten lässt. Wenn sich das Fahrzeug außerhalb des Parkplatzes befindet, also z.B. nach einem Verlassen des Parkplatzes, kann das Fahrzeug nicht mehr mittels des Startsignals gestartet werden. Somit wird also in vorteilhafter Weise ein Zugriff auf das Fahrzeug von einem Parkplatzverwaltungsserver im Rahmen eines automatic valet parking-Vorgangs ermöglicht, nicht jedoch außerhalb eines solchen automatic valet parking-Vorgangs.

Der räumlich Bereich ist beispielsweise mittels des Grundrisses des Parkplatzes, insbesondere des Parkhauses, vorzugsweise mit einem Delta zur Vorbeugung gegen Ungenauigkeiten, definiert und/oder beispielsweise durch einen Umkreis um einen Punkt (z.B. eine GPS Koordinate) definiert.

Erfindungsgemäß ist vorgesehen, dass die eine oder mehrere Bedingungen umfassen, dass eine momentane Zeit innerhalb eines vorbestimmten Zeitfensters liegen muss, damit das Fahrzeug ansprechend auf das Startsignal autonom startet. Dadurch wird insbesondere der technische Vorteil bewirkt, dass sich das Fahrzeug nur zu bestimmten Zeiten mittels des Startsignals starten lässt. Außerhalb dieser Zeiten kann das Fahrzeug nicht mehr mittels des Startsignals gestartet werden. Somit kann also in vorteilhafter Weise ein Zugriff auf das Fahrzeug nur auf bestimmte Zeiten beschränkt werden.

Erfindungsgemäß ist vorgesehen, dass das vorbestimmte Zeitfenster einer Parkdauer des Fahrzeugs auf einem Parkplatz entspricht. Dadurch wird insbesondere der technische Vorteil bewirkt, dass ein Zugriff auf das Fahrzeug zwecks Starten des Fahrzeugs nur während der Parkdauer des Fahrzeugs möglich ist. Das heißt also insbesondere, dass, wenn das Fahrzeug nicht mehr parkt, sondern vom Parkplatz weggefahren ist, kein Zugriff mehr auf das Fahrzeug möglich ist.

Nach einer weiteren Ausführungsform ist vorgesehen, dass ein Fahrzeugstartzertifikat an einen Parkplatzverwaltungsserver eines Parkplatzes gesendet wird, wobei das Fahrzeugstartzertifikat ein vorbestimmtes Zeitfenster und/oder einen vorbestimmten räumlichen Bereich definiert, innerhalb welchen der Parkplatzverwaltungsserver das Fahrzeug mittels des Startsignals starten kann.

Dadurch wird insbesondere der technische Vorteil bewirkt, dass der Parkplatzverwaltungsserver Kenntnis darüber erlangt, zu welchen Zeiträumen und in welchen Bereichen der Zugriff auf das Fahrzeug seitens des Parkplatzverwaltungsservers möglich ist.

In einer anderen Ausführungsform ist vorgesehen, dass ansprechend auf ein autonomes Starten des Fahrzeugs ansprechend auf das empfangene Startsignal ein Informationssignal über das Kommunikationsnetzwerk an einen Teilnehmer des Kommunikationsnetzwerks gesendet wird, dass sich das Fahrzeug ansprechend auf das Startsignal gestartet hat.

Dadurch wird insbesondere der technische Vorteil bewirkt, dass der Teilnehmer des Kommunikationsnetzwerks darüber informiert wird, dass das Fahrzeug ansprechend auf das Startsignal gestartet wurde. Der Teilnehmer eines Kommunikationsnetzwerks ist beispielsweise ein Mobilfunktelefon. Ein solches Mobilfunktelefon gehört beispielsweise einem Fahrer des Fahrzeugs. Somit weiß also der Fahrer des Fahrzeugs Bescheid, dass ein Fahrzeug gerade gestartet wurde.

Nach einer anderen Ausführungsform ist vorgesehen, dass sich das Fahrzeug autonom abschaltet, wenn es über das Kommunikationsnetzwerk von dem Teilnehmer kein Bestätigungssignal empfangen hat, dass das Fahrzeug angeschaltet bleiben soll. Dadurch wird insbesondere der technische Vorteil bewirkt, dass eine ausdrückliche Zustimmung vorliegen muss, damit das Fahrzeug angeschaltet bleibt. So kann also der Fahrer des Fahrzeugs über sein Mobilfunktelefon das Bestätigungssignal an das Fahrzeug senden. Das heißt also insbesondere, dass der Fahrer explizit seine Zustimmung dafür geben muss, dass das Fahrzeug angeschaltet bleiben soll.

In einer anderen Ausführungsform ist vorgesehen, dass sich das Fahrzeug ansprechend auf einen Empfang eines über das Kommunikationsnetzwerk gesendetes Abbruchsignal des Teilnehmers abschaltet. Dadurch wird insbesondere der technische Vorteil bewirkt, dass das Fahrzeug bei einem expliziten Abbruchwunsch eines Fahrers sich wieder abschaltet. Der Fahrer behält letztlich die Kontrolle darüber, ob sein Fahrzeug angeschaltet bleibt oder nicht.

In einer anderen Ausführungsform ist vorgesehen, dass vor dem autonomen Starten des Fahrzeugs ein Informationssignal über das Kommunikationsnetzwerk an einen Teilnehmer des Kommunikationsnetzwerks gesendet wird, dass das Fahrzeug ansprechend auf ein Startsignal gestartet werden soll. Das heißt also, dass noch bevor einem Starten des Fahrzeugs der Fahrer des Fahrzeugs über den bevorstehenden Startvorgang informiert wird. Er kann somit seine ausdrückliche Zustimmung erteilen oder nicht.

So ist nach einer anderen Ausführungsform vorgesehen, dass sich das Fahrzeug nicht autonom anschaltet, wenn es kein Bestätigungssignal von dem Teilnehmer des Kommunikationsnetzwerks empfangen hat.

Funktionalitäten der Vorrichtung und des Parkplatzverwaltungsservers ergeben sich analog aus den Funktionalitäten des Verfahrens und umgekehrt.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: einen Parkplatzverwaltungsserver für einen Parkplatz und
- Fig. 4: ein Fahrzeug.

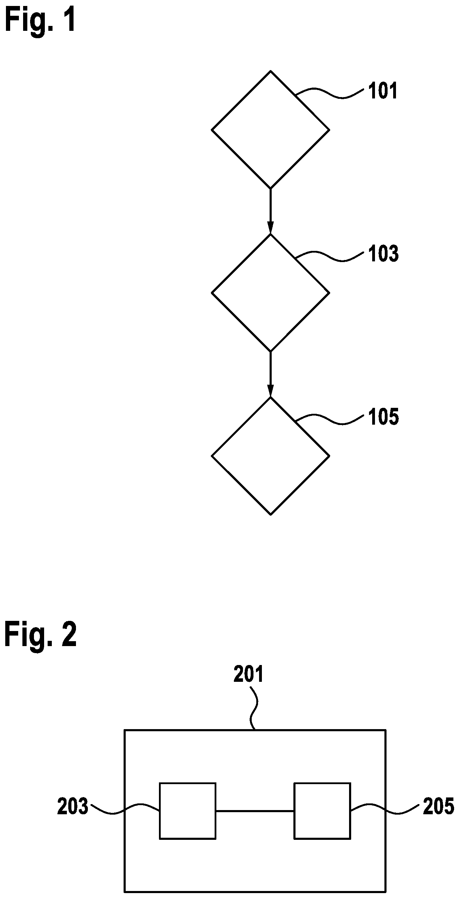

Fig. 1 zeigt ein Ablaufdiagramm eines Verfahrens zum Betreiben eines Fahrzeugs.

Gemäß einem Schritt 101 empfängt das Fahrzeug über ein Kommunikationsnetzwerk ein Startsignal zum Starten des Fahrzeugs. Das heißt also, dass das Startsignal eine Aufforderung an das Fahrzeug ist, dass sich das Fahrzeug autonom startet.

Ein Starten im Sinne der vorliegenden Erfindung umfasst insbesondere ein Starten eines Antriebsmotors des Fahrzeugs. Ein Antriebsmotor des Fahrzeugs ist beispielsweise ein Elektromotor oder ein Verbrennungsmotor oder ein Hybridmotor, also eine Kombination aus einem Elektro- und einem Verbrennungsmotor.

In einem Schritt 103 überprüft das Fahrzeug ansprechend auf das Startsignal, ob eine oder mehrere vorbestimmte Bedingungen erfüllt sind. Nur wenn eine oder mehrere vorbestimmte Bedingungen erfüllt sind, so startet das Fahrzeug gemäß einem Schritt 105 autonom.

Das heißt also insbesondere, dass zum einen ein Startsignal vorliegen muss und zum anderen müssen eine oder mehrere vorbestimmte Bedingungen erfüllt sein, damit das Fahrzeug autonom startet.

Fig. 2 zeigt eine Vorrichtung 201 zum Betreiben eines Fahrzeugs.

Die Vorrichtung 201 umfasst eine Kommunikationsschnittstelle 203, die ausgebildet ist, über ein Kommunikationsnetzwerk ein Startsignal zum Starten des Fahrzeugs zu empfangen. Die Vorrichtung 201 umfasst eine Starteinrichtung 205, die ausgebildet ist, das Fahrzeug ansprechend auf das Startsignal autonom zu starten, wenn eine oder mehrere vorbestimmte Bedingungen erfüllt sind. Das Überprüfen, ob die Bedingungen erfüllt sind oder nicht, wird beispielsweise mittels der Starteinrichtung durchgeführt. Insbesondere wird dies mittels einer Steuerungseinrichtung durchgeführt.

Die Vorrichtung 201 ist nach einer Ausführungsform ausgebildet, das Verfahren zum Betreiben eines Fahrzeugs durchzuführen.

Die erfindungsgemäße Idee, einen Zugriff auf das Fahrzeug nicht nur von einem Startsignal, sondern auch von bestimmten Bedingungen abhängig zu machen, ist insbesondere von Vorteil bei einem automatic valet parking-Vorgang, also einem automatischen Parkvorgang. So ist beispielsweise vorgesehen, dass die Bedingungen entsprechend den spezifischen Anforderungen des automatic valet parking-Vorgangs gewählt werden, sodass nur im Rahmen des valet parking-Vorgangs ein Zugriff auf das Fahrzeug zum Starten des Fahrzeugs mittels des Startsignals möglich ist. Außerhalb des automatischen Parkvorgangs wird ein Zugriff unterbunden, das heißt also, dass dann ein Startsignal das Fahrzeug nicht mehr startet.

So ist also nach einer Ausführungsform vorgesehen, dass der Zugriff auf das Fahrzeug räumlich auf den Parkplatz und/oder auf die Parkdauer beschränkt bleibt. Sobald das Fahrzeug den Parkplatz verlassen hat und/oder eine Parkdauer abgelaufen ist, ist kein Zugriff mehr auf das Fahrzeug mittels des Startsignals möglich.

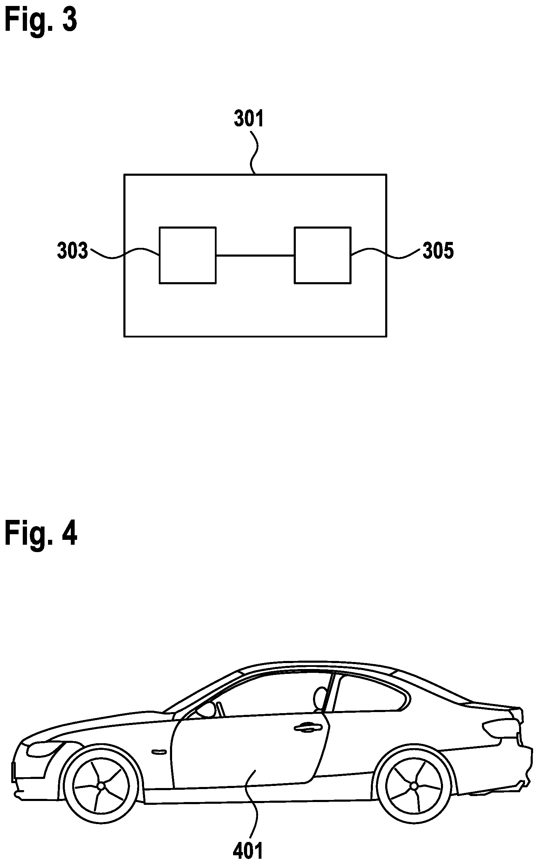

Fig. 3 zeigt einen Parkplatzverwaltungsserver 301 für einen Parkplatz.

Der Parkplatzverwaltungsserver umfasst einen Prozessor 303, der ausgebildet ist, ein Startsignal zum Starten eines Fahrzeugs zu generieren. Der Parkplatzverwaltungsserver 301 umfasst ferner eine Kommunikationsschnittstelle 305, die ausgebildet ist, das Startsignal über ein Kommunikationsnetzwerk an ein Fahrzeug zu senden.

Nach einem anderen Aspekt ist ein Parkplatz vorgesehen, der den Parkplatzverwaltungsserver 301 umfasst.

Fig. 4 zeigt ein Fahrzeug 401. Das Fahrzeug 401 ist ausgebildet, das erfindungsgemäße Verfahren zum Betreiben eines Fahrzeugs durchzuführen. Beispielsweise umfasst das Fahrzeug 401 die erfindungsgemäße Vorrichtung zum Betreiben eines Fahrzeugs. Bei dem Fahrzeug 401 handelt es sich beispielsweise um ein autonom fahrendes Fahrzeug. Insbesondere handelt es sich bei dem Fahrzeug 401 um ein AVP-Fahrzeug. Das heißt also, dass das Fahrzeug 401 autonom auf einem Parkplatz fahren und in Parkpositionen ein- und wieder ausparken kann.

Die Erfindung stellt also insbesondere die Möglichkeit bereit, dass ein Parkplatzverwaltungsserver, der beispielsweise von einem Parkplatzmanagementsystem (Parkplatzverwaltungssystem) umfasst sein kann, das Fahrzeug durch ein von außerhalb des Fahrzeuges initiiertes Signal (das Startsignal), z.B. über eine WLAN-Kommunikation und/oder über eine C2X-Kommunikation, ohne menschliche Unterstützung (z.B. mittels Knopfdrücken im Fahrzeug) starten kann. Ein solcher Start wird mindestens nach einer Parkphase für die Rückholung (Rückfahrt) aus der Parkposition zu der Abgabeposition benötigt. Weiterhin wird respektive kann ein solcher Start bei den folgenden Situationen möglich respektive notwendig sein:
Eine Übergabe an der Abgabestelle oder Abgabeposition, falls das Fahrzeug bereits abgeschaltet ist.

Ein Umparken während des Parkvorganges, z.B. ein Elektrofahrzeug soll von einer Parkbucht mit einer Lademöglichkeit zu einer Parkbucht ohne eine solche Lademöglichkeit umgeparkt werden.

Mittels der Erfindung ist es in vorteilhafter Weise ermöglicht, dass ein Zugriff auf das Fahrzeug für den automatischen Parkvorgang (automatic valet parking) bezüglich der Rechtmäßigkeit und Sicherheit (Diebstahlschutz) sichergestellt werden kann.

So ist nach einer Ausführungsform vorgesehen, dass das Fahrzeug nur durch das von außen initiierte Signal (Startsignal, z.B. mittels WLAN-Kommunikation übermittelt) nur im Zeitfenster des Parkvorgangs und/oder im räumlichen Bereich des Parkvorgangs (z.B. im Parkhaus oder auf dem Parkplatz) gestartet werden kann. Außerhalb des Zeitfensters und/oder außerhalb des räumlichen Bereichs wird der Start des Fahrzeugs vom Fahrzeugsystem, also hier insbesondere von der Vorrichtung, abgelehnt.

Die räumliche Ausbreitung kann dabei beispielsweise sehr genau durch den Grundriss des Parkhauses (gegebenenfalls vorzugsweise mit einem Delta zur Vorbeugung gegen Ungenauigkeiten) und/oder durch einen Umkreis um einen Punkt (z.B. GPS Koordinate) definiert werden.

Die zeitliche Begrenzung kann entweder ein definiertes Zeitfenster (z.B. 2 Stunden) oder durch das Ende des Parkvorganges definiert sein. Des Weiteren kann es durch ein "Dauerzeitfenster" (z.B. ein Jahr) definiert sein, wenn der Fahrer das Parkhaus bzw. den Parkplatz öfter nutzt.

Technisch wird es nach einer Ausführungsform gelöst, indem dem Parkmanagementsystem ein "Fahrzeugstart-Zertifikat" übermittelt wird, das den zeitlichen Aspekt und den räumlichen Aspekt beinhaltet. Ähnlich wie bei einer zeitlich befristeten "WLAN-Buchung" in einem Hotel.

In einer weiteren Ausführungsform ist vorgesehen, dass das Zertifikat gleichzeitig für mehrere Parkhäuser/Parkplätze (z.B. von einer Parkhauskette) definiert ist.

In einer weiteren Ausführungsform ist vorgesehen, dass beim Start des Fahrzeuges der Fahrer/Eigentümer über das von außen initiierte Signal informiert wird (z.B. über Mobiltelefon).

In einer weiteren Ausführungsform ist vorgesehen, dass der Fahrer/Eigentümer nach der Information seine Zustimmung (z.B. wieder über Mobiltelefon) geben muss.

In einer weiteren Ausführungsform ist vorgesehen, dass der Fahrer/Eigentümer den Startvorgang jederzeit abbrechen/verweigern kann.

In einer anderen Ausführungsform sind der gesamte Datenverkehr (also die Kommunikation über das Kommunikationsnetzwerk) sowie das Zertifikat zwischen Fahrzeug, Mobiltelefon und Parkraummanagementsystem dabei verschlüsselt.

## Patentansprüche

1. Verfahren zum Betreiben eines Fahrzeugs (401), wobei das Fahrzeug (401) über ein Kommunikationsnetzwerk ein Startsignal zum Starten des Fahrzeugs (401) empfängt (101), wobei das Fahrzeug (401) ansprechend auf das Startsignal nur dann autonom startet (105), wenn eine oder mehrere vorbestimmte Bedingungen erfüllt sind, **dadurch gekennzeichnet, dass** die eine oder mehrere Bedingungen umfassen, dass eine momentane Zeit innerhalb eines vorbestimmten Zeitfensters liegen muss, damit das Fahrzeug (401) ansprechend auf das Startsignal autonom startet, wobei das vorbestimmte Zeitfenster einer Parkdauer des Fahrzeugs (401) auf einem Parkplatz entspricht.

2. Verfahren nach Anspruch 1, **dadurch gekennzeichnet, dass** die eine oder mehrere Bedingungen weiterhin umfassen, dass eine momentane Fahrzeugposition innerhalb eines vorbestimmten räumlichen Bereichs liegen muss, damit das Fahrzeug (401) ansprechend auf das Startsignal autonom startet.

3. Verfahren nach einem der Ansprüche 1 oder 2, wobei der vorbestimmte räumliche Bereich einem Parkvorgang zugeordnet ist.

4. Verfahren nach Anspruch 2, wobei der vorbestimmte räumliche Bereich einen Parkplatz umfasst.

5. Verfahren nach einem der vorherigen Ansprüche, wobei ein Fahrzeugstartzertifikat an einen Parkplatzverwaltungsserver eines Parkplatzes gesendet wird, wobei das Fahrzeugstartzertifikat ein vorbestimmtes Zeitfenster und/oder einen vorbestimmten räumlichen Bereich definiert, innerhalb welchen der Parkplatzverwaltungsserver das Fahrzeug (401) mittels des Startsignals starten kann.

6. Verfahren nach einem der vorherigen Ansprüche, wobei ansprechend auf ein autonomes Starten des Fahrzeugs (401) ansprechend auf das empfangene Startsignal ein Informationssignal über das Kommunikationsnetzwerk an einen Teilnehmer des Kommunikationsnetzwerks gesendet wird, dass sich das Fahrzeug (401) ansprechend auf das Startsignal gestartet hat.

7. Verfahren nach Anspruch 6, wobei sich das Fahrzeug (401) autonom abschaltet, wenn es über das Kommunikationsnetzwerk von dem Teilnehmer kein Bestätigungssignal empfangen hat, dass das Fahrzeug (401) angeschaltet bleiben soll.

8. Verfahren nach Anspruch 6 oder 7, wobei sich das Fahrzeug (401) ansprechend auf einen Empfang eines über das Kommunikationsnetzwerk gesendetes Abbruchsignals des Teilnehmers abschaltet.

9. Verfahren nach einem der vorherigen Ansprüche, wobei vor dem autonomen Starten des Fahrzeugs (401) ein Informationssignal über das Kommunikationsnetzwerk an einen Teilnehmer des Kommunikationsnetzwerks gesendet wird, dass das Fahrzeug (401) ansprechend auf das Startsignal gestartet werden soll.

10. Vorrichtung (201) zum Betreiben eines Fahrzeugs (401), umfassend eine Kommunikationsschnittstelle (203), die ausgebildet ist, über ein Kommunikationsnetzwerk ein Startsignal zum Starten des Fahrzeugs (401) zu empfangen, und eine Starteinrichtung (205), die ausgebildet ist, das Fahrzeug (401) ansprechend auf das Startsignal autonom zu starten, wenn eine oder mehrere vorbestimmte Bedingungen erfüllt sind, **dadurch gekennzeichnet, dass** die eine oder mehrere Bedingungen umfassen, dass eine momentane Zeit innerhalb eines vorbestimmten Zeitfensters liegen muss, damit das Fahrzeug (401) ansprechend auf das Startsignal autonom startet, wobei das vorbestimmte Zeitfenster einer Parkdauer des Fahrzeugs (401) auf einem Parkplatz entspricht.

11. Computerprogramm, umfassend Programmcode zur Durchführung des Verfahrens nach einem der Ansprüche 1 bis 9, wenn das Computerprogramm auf einem Computer ausgeführt wird.

## Claims

1. Method for operating a vehicle (401), wherein the vehicle (401) receives (101) a starting signal for starting the vehicle (401) via a communication network, wherein the vehicle (401) starts (105) autonomously in response to the starting signal only when one or more predetermined conditions have been satisfied, **characterized in that** the one or more conditions comprise the fact that a current time must be within a predetermined time window so that the vehicle (401) starts autonomously in response to the starting signal, wherein the predetermined time window corresponds to a parking time of the vehicle (401) in a parking space.

2. Method according to Claim 1, **characterized in that** the one or more conditions also comprise the fact that a current vehicle position must be within a predetermined spatial area so that the vehicle (401) starts autonomously in response to the starting signal.

3. Method according to either of Claims 1 and 2, wherein the predetermined spatial area is assigned to a parking operation.

4. Method according to Claim 2, wherein the predetermined spatial area comprises a parking space.

5. Method according to one of the preceding claims, wherein a vehicle starting certificate is transmitted to a parking space management server of a parking space, wherein the vehicle starting certificate defines a predetermined time window and/or a predetermined spatial area within which the parking space management server can start the vehicle (401) by means of the starting signal.

6. Method according to one of the preceding claims, wherein, in response to autonomous starting of the vehicle (401) in response to the received starting signal, an information signal indicating that the vehicle (401) has started in response to the starting signal is transmitted to a subscriber of the communication network via the communication network.

7. Method according to Claim 6, wherein the vehicle (401) switches off autonomously if it has not received, via the communication network, a confirmation signal from the subscriber indicating that the vehicle (401) is intended to remain switched on.

8. Method according to Claim 6 or 7, wherein the vehicle (401) switches off in response to reception of an abort signal from the subscriber which is transmitted via the communication network.

9. Method according to one of the preceding claims, wherein, before the autonomous starting of the vehicle (401), an information signal indicating that the vehicle (401) is intended to be started in response to the starting signal is transmitted to a subscriber of the communication network via the communication network.

10. Apparatus (201) for operating a vehicle (401), comprising a communication interface (203), which is designed to receive a starting signal for starting the vehicle (401) via a communication network, and a starting device (205), which is designed to autonomously start the vehicle (401) in response to the starting signal if one or more predetermined conditions have been satisfied, **characterized in that** the one or more conditions comprise the fact that a current time must be within a predetermined time window so that the vehicle (401) starts autonomously in response to the starting signal, wherein the predetermined time window corresponds to a parking time of the vehicle (401) in a parking space.

11. Computer program comprising program code for carrying out the method according to one of Claims 1 to 9 when the computer program is executed on a computer.

## Revendications

1. Procédé permettant de faire fonctionner un véhicule (401), dans lequel le véhicule (401) reçoit (101), par l'intermédiaire d'un réseau de communication, un signal de démarrage pour démarrer le véhicule (401), dans lequel le véhicule (401) démarre (105) de manière autonome en réponse au signal de démarrage, uniquement lorsqu'une ou plusieurs conditions prédéfinies sont satisfaites, **caractérisé en ce que** lesdites une ou plusieurs conditions comprennent le fait qu'un temps instantané doit se situer à l'intérieur d'une fenêtre temporelle prédéfinie pour que le véhicule (401) puisse démarrer de manière autonome en réponse au signal de démarrage, dans lequel la fenêtre temporelle prédéfinie correspond à une période de stationnement du véhicule (401) dans une place de stationnement.

2. Procédé selon la revendication 1, **caractérisé en ce que** lesdites une ou plusieurs conditions comprennent en outre le fait qu'une position instantanée du véhicule doit se situer dans une zone spatiale prédéfinie pour que le véhicule (401) puisse démarrer de manière autonome en réponse au signal de démarrage.

3. Procédé selon l'une des revendications 1 ou 2, dans lequel la zone spatiale prédéfinie est associée à une opération de stationnement.

4. Procédé selon la revendication 2, dans lequel la zone spatiale prédéfinie comprend une place de stationnement.

5. Procédé selon l'une des revendications précédentes, dans lequel un certificat de démarrage de véhicule est envoyé à un serveur de gestion de places de stationnement d'une place de stationnement, dans lequel le certificat de démarrage de véhicule définit une fenêtre temporelle prédéfinie et/ou une zone spatiale prédéfinie à l'intérieur de laquelle le serveur de gestion de places de stationnement peut démarrer le véhicule (401) au moyen du signal de démarrage.

6. Procédé selon l'une des revendications précédentes, dans lequel, en réponse à un démarrage autonome du véhicule (401) en réponse au signal de démarrage reçu, un signal d'information indiquant que le véhicule (401) a démarré en réponse au signal de démarrage, est envoyé par l'intermédiaire du réseau de communication à un abonné du réseau de communication.

7. Procédé selon la revendication 6, dans lequel le véhicule (401) s'arrête de manière autonome lorsqu'il n'a pas reçu, par l'intermédiaire du réseau de communication, de signal de confirmation de l'abonné indiquant que le véhicule (401) doit rester en marche.

8. Procédé selon la revendication 6 ou 7, dans lequel le véhicule (401) s'arrête en réponse à la réception, par l'intermédiaire du réseau de communication, d'un signal d'interruption envoyé par l'abonné.

9. Procédé selon l'une des revendications précédentes, dans lequel, avant le démarrage autonome du véhicule (401), un signal d'information indiquant que le véhicule (401) doit être démarré en réponse au signal de démarrage est envoyé, par l'intermédiaire du réseau de communication, à un abonné du réseau de communication.

10. Dispositif (201) permettant de faire fonctionner un véhicule (401), comprenant une interface de communication (203) conçue pour recevoir, par l'intermédiaire d'un réseau de communication, un signal de démarrage pour démarrer le véhicule (401), et un moyen de démarrage (205) conçu pour démarrer de manière autonome le véhicule (401) en réponse au signal de démarrage lorsqu'une ou plusieurs conditions prédéfinies sont satisfaites, **caractérisé en ce que** lesdites une ou plusieurs conditions comprennent le fait qu'un temps instantané doit se situer à l'intérieur d'une fenêtre temporelle prédéfinie pour que le véhicule (401) puisse démarrer de manière autonome en réponse au signal de démarrage, dans lequel la fenêtre temporelle prédéfinie correspond à une période de stationnement du véhicule (401) dans une place de stationnement.

11. Programme d'ordinateur comprenant un code de programme destiné à mettre en œuvre le procédé selon l'une des revendications 1 à 9 lorsque le programme d'ordinateur est exécuté sur un ordinateur.
